# EUROPEAN PATENT APPLICATION

(11) **EP 3 741 480 A1**
(43) Date of publication of application: **25.11.2020**
(21) Application number: 19176354.9
(22) Date of filing: 24.05.2019
(51) Int. Cl.: B22F 3/105, B33Y 10/00, B33Y 30/00, B29C 64/153

(54) **POWDER BED FUSION SYSTEM FOR A MULTI-MATERIAL PRODUCTION OF AN OBJECT**

(71) Applicant: Siemens Aktiengesellschaft, 80333 München (DE)
(72) Inventor: Lebed, Yaroslav, 13629 Berlin (DE)

(57) **Abstract**

The invention relates to a powder bed fusion system (2) for a multi-material production of an object (4) layer-by-layer using thermal energy to induce fusion to the materials, comprising:
- a manufacturing surface (8) where the object (4) is formed, the manufacturing surface (8) being a sub-area of a recoating surface (6),
- material depositing recoater (20) configured to deposit at least one of the materials in a layer on the manufacturing surface (8),
- an energy source configured to selectively direct energy to the materials disposed on the manufacturing surface (8),
- a first material supply container (16) arranged to store a first material and a second material supply container (18) arranged to store a second material.

In order to reliably collect the excess powder without mixing up the different materials, a first material overflow container (12) is provided at the side of the second supply container (18), the first material overflow container (12) having a first shutter (22) separating the first material overflow container (12) from the recoating surface (6), the first shutter (22) having an open position and a closed position. Also a second material overflow container (14) is provided at the side of the first supply container (16), the second material overflow container (14) having a second shutter (24) separating the second material overflow container (14) from the recoating surface (6), the second shutter (24) having an open position and a closed position, wherein the first shutter (22) and the second shutter (24) are designed for being opened and closed independently.

## Description

The invention relates to a powder bed fusion system for a multi-material production of an object layer-by-layer using thermal energy to induce fusion to the materials. The invention further relates to a method for producing a multi-material object layer-by-layer using such powder bed fusion system.

Powder bed fusion (PBF) manufacturing methods, such as selective laser melting (SLM), selective laser sintering (SLS) or electron beam melting (EBM) are suitable for fabricating, prototyping or manufacturing parts or components of complex shapes from a, preferably powdery, base material.

Powder bed fusion systems usually comprise a manufacturing or build platform on which the component is built layer-by-layer after the feeding of a layer of base material which may then be melted, e.g. by an energy beam, such as a laser, and subsequently solidified. The layer thickness is determined by a recoater that moves, e.g. automatically, over the powder bed and removes excess material from a recoating surface. Typically, the layer is thick between 20 µm and 40 µm. During the manufacture, said energy beam scans over the surface and melts the powder on selected areas which may be predetermined by a CAD-file according to the geometry of the object to be manufactured. Said scanning or irradiation is preferably carried out in a computer implemented way or via computer aided means, such as computer aided manufacturing (CAM) instructions, which may be present in the form of a dataset.

A powder bed fusion system for a multi-material production of an object layer-by-layer is described in US 2014/0252685 A1. The powder bed fusion system comprises multiple material supply powder feeders which enable different powder material types to be selected and used in the case of multi-material parts. Material depositing means is configured to deposit the plurality of materials in one layer at a time in an area defined by a part bed surface. Afterwards, a thermal source selectively directs energy to the materials, wherein the amount of thermal energy absorbed varies by region of a layer. For any given layer, the amount of material transferred to the part bed surface may exceed what will be needed to form the layer. To avoid unnecessary waste of material, the system includes a second blade that is configured to remove any material that either does not reach the part bed surface, or that is not scanned. The removal of excess material can occur after each layer is scanned and/or upon completion of the part. Yet, US 2014/0252685 A1 does not suggest specific solution for a separate removal of the different types of materials.

It is therefore a goal of the present invention to provide a powder bed fusion system for printing layer-wise with two or more different materials simultaneously, wherein the excess powder is reliably collected and mixing up the different materials is minimized.

The goal of the invention is achieved by the independent claim 1. The dependent claims describe advantageous developments and modifications of the invention.

In accordance with the invention there is provided a powder bed fusion system for a multi-material production of an object layer-by-layer using thermal energy to induce fusion to the materials, comprising:
- a manufacturing surface where the object is formed, the manufacturing surface being a sub-area of a recoating surface,
- a material depositing recoater configured to deposit at least one of the materials in a layer on the manufacturing surface,
- an energy source configured to selectively direct energy to the materials disposed on the manufacturing surface,
- a first material supply container arranged to store a first material and a second material supply container arranged to store a second material,
   wherein
- a first material overflow container is provided at the side of the second material supply container, the first material overflow container having a first shutter separating the first material overflow container from the recoating surface, the first shutter having an open position and a closed position, and
- a second material overflow container is provided at the side of the first material supply container, the second material overflow container having a second shutter separating the second material overflow container from the recoating surface, the second shutter having an open position and a closed position,
- the first shutter and the second shutter are designed for being opened and closed independently.

The component as referred to herein may particularly relate to a steam or gas turbine component, such as a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit kit. Alternatively, said component may relate to another or similar component.

The powder bed fusion system comprises a manufacturing surface, adjacent to which the powder delivery systems such as material supply containers are arranged. The recoating surface may comprise a plurality of openings formed therein to accommodate the material supply containers. The recoating surface further comprises a sub-area, the manufacturing surface, which spans over a building platform. A recoater, which could be a powder scraper or a roller, moves over the recoating surface thus depositing material from one of the material supply containers in the area of the manufacturing surface.

The essential idea of the present invention is to enable collecting the excess material in a separate collector every time a different material is applied. This is done by means of a material overflow container for each material, wherein the material overflow containers can be opened and closed by shutters independently from each other, i.e. the first and the second shutter can take different positions. This way the material overflow containers can be closed and opened in an alternating manner, so that bidirectional powder recoating is possible and the removal of the excess or overflow powder after each recoating step is optimized.

In a preferred embodiment, each material overflow container is arranged between the manufacturing surface and one of the material supply containers. By arranging the overflow container for each of the materials before the other material supply container is reached by the recoater when depositing another material, it is possible to collect the excess powder before it is distributed on the recoating surface to the material supply container for a different material. This way mixing of the first and the second materials is effectively avoided. Also, no complex designs are required to close the material supply containers whenever their material is used in the particular recoating step.

In another preferred embodiment, the shutters in the closed position are aligned with the recoating surface, thus building one planar recoating surface stretching from one material supply container to the opposite material overflow container.

In yet another preferred embodiment, means are provided, configured to close the first shutter and to open the second shutter when the second material is deposited on the manufacturing surface and to close the second shutter and to open the first shutter when the first material is deposited on the manufacturing surface. Such means comprise for example a control unit controlling the state of the shutter depending on the material being deposited as well as mechanical means for moving the shutter between the closed and the opened position.

Preferably, the system is configured to vary the irradiation parameters depending on the materials to be fused. Hence, the energy intensity directed from the energy source is varied depending the type of materials to be fused. This way it is possible to use two different materials in the material supply containers having different fusion characteristics.

Preferably, the irradiation parameters are varied depending on the thickness of the layer to be fused. In this case, it is possible to adjust the energy intensity directed from the energy source depending on the number of layers to be fused at the same time.

In addition, variation of the irradiation parameters is also possible within certain regions of the object, between two layers of the object, or within a particular layer of the object.

Still preferably, the energy source comprises a laser or an electron beam.

In yet another preferred embodiment, the first and/or the second material are chosen from one or more of metal powder, ceramic powder and polymer powder.

In accordance with the invention there is also provided a method for producing a multi-material object layer-by-layer using a powder bed fusion system as described above, wherein
- the first shutter is closed and the second shutter is opened, when the second material is deposited on the manufacturing surface; and
- the second shutter is closed and the first shutter is opened, when the first material is deposited on the manufacturing surface.

Preferably, the method comprises the steps of:
- depositing at least one layer of material from one of the material supply containers on the manufacturing surface and directing energy from the energy source to fuse each layer separately, and
- depositing at least one layer of material from another material supply container on the manufacturing surface and energy from the energy source to fuse each layer separately. According to this embodiment at least two layers from two different material supply containers, i.e. from two different materials, are disposed one above the other and fused separately. Also, many layers of the same material can be disposed one on top of the other and each layer can be fused separately, before a layer of the second material is disposed and fused.

In an alternative embodiment, the method comprises the steps of depositing at least two layers of material from one of the material supply containers on the manufacturing surface and directing energy from the energy source to fuse said layers. According to this alternative embodiment, two or more layers of the same material are fused simultaneously.

In yet another alternative embodiment, the method comprises the steps of:
- depositing at least one layer of material from one of the material supply containers on the manufacturing surface,
- depositing at least one layer of material from another material supply container on the manufacturing surface, and
- directing energy from the energy source to fuse said layers. In this case, different layers of the different materials are deposited above one other and all layers are fused simultaneously.

Embodiments of the invention are now described, by way of example only, with reference to the accompanying drawings, of which the only figure shows schematically an exemplary design of a powder bed fusion system for a multi-material production of an object.

Although the present invention has been described in detail with reference to the preferred embodiment, it is to be understood that the present invention is not limited by the disclosed example, and that numerous additional modifications and variations could be made thereto by a person skilled in the art without departing from the scope of the invention.

The figure shows a powder bed fusion system 2 for a multi-material production of an object 4, in particular a component for a stationary turbine. The powder bed fusion system 2 comprises a recoating surface 6, wherein a manufacturing surface 8, which spans over a building platform 10, forms a sub-area of the recoating surface 6. A piston (not shown) moves the building platform 10 vertically relative to the recoating surface 6.

Adjacent to the manufacturing surface 8 on opposite sides of the manufacturing surface 8 a first overflow container 12 and a second overflow container 14 are arranged. On the side of the second overflow container 14 a first material supply container 16 is provided and on the side of the first overflow container 12 a second material supply container 18 is provided such that the overflow containers 12, 14 are located each between the manufacturing surface 8 and one of the material supply containers 16, 18. The material supply containers 16, 18 contain different types of powder, e.g. titanium, aluminum, copper, and stainless steel alloys or polymer materials such as polycarbonate, polystyrene, etc.

A recoater 20, which could be a powder scraper or a roller, moves over the recoating surface 6 thus depositing material from one of the material supply containers 16, 18 over the manufacturing surface 8.

A plurality of openings is formed in the recoating surface 6 to accommodate the overflow container 12, 14 and the material supply container 16, 18. Each material supply container 16, 18 has a bottom surface 19 and piston (not shown) as described above. This allows more efficient powder feeding by eliminating the need for the recoater 20 to return to one side before feeding the next layer of powder.

The powder bed fusion system 2 also comprises an energy source, not shown in the figure, configured to selectively direct energy to the materials disposed on the manufacturing surface 8.

According to the present invention, the first material overflow container 12 is provided with a first shutter 22 and the second material overflow container 14 is provided with a second shutter 24. Both shutters 22, 24 have a closed position, as shown in the figure, and an open position indicated by dashed lines. In the closed position, the shutters 22, 24 are aligned with the recoating surface 6 and separate the respective material overflow container 12, 14 from the recoating surface 6. In the open position of the shutters 22, 24 material disposed by the recoater 20 on the recoating surface 6 can fall into the respective material overflow container 12, 14.

The shutters 22, 24 are opened and closed by a control unit 26, schematically shown as a block in the drawing. The shutters 22, 24 are opened and closed alternating, depending on the material being distributed by the recoater 20. The control unit 26 is configured to close the first shutter 22 and to open the second shutter 24 when the second material taken from the second material supply container 18 is deposited on the manufacturing surface 8. On the other hand, when material from the first material supply container 16 feeded, the second shutter 24 is closed and the first shutter 22 is opened. This is done to make sure that no powder from the first material container 16 falls into the second material overflow container 14 and no powder from the second material container 16 falls into the first material overflow container 12.

With respect to the order of application of the different materials, normally each layer is fused separately. Yet, the powder bed fusion system 2 can be used in different manners of operation, explained below.

In a first manner of operation, different layers of the same material are deposited above one other and all layers are fused individually.

In a third manner of operation, adjacent layers of the same material are fused simultaneously.

In a third manner of operation, the first and the second materials are deposited on the manufacturing surface and the energy source is directed to the manufacturing surface to induce fusion of the first and the second material at the same time.

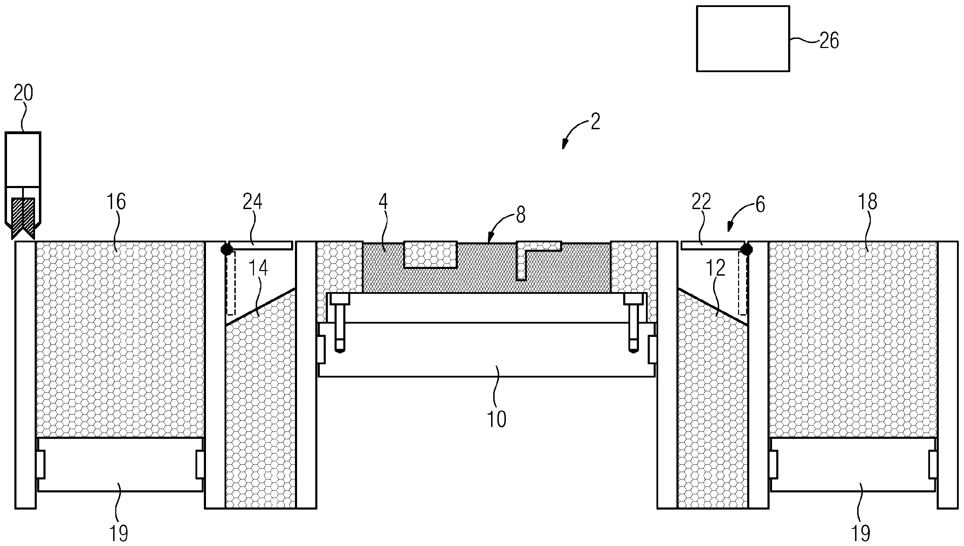

Figure 1 shows an exemplary embodiment of the powder bed fusion system 2 comprising two material supply containers 16, 18 and two material overflow containers 12, 14. Yet, the powder bed fusion system 2 may comprise more containers, e.g. two more material supply containers and two more material overflow containers aligned in the plane of the recoating surface perpendicular to the material supply containers 16, 18 and material overflow containers 12, 14.

## Claims

1. Powder bed fusion system (2) for a multi-material production of an object (4) layer-by-layer using thermal energy to induce fusion to the materials, comprising:
- a manufacturing surface (8) where the object (4) is formed, the manufacturing surface (8) being a sub-area of a recoating surface (6),
- a material depositing recoater (20) configured to deposit at least one of the materials in a layer on the manufacturing surface (8),
- an energy source configured to selectively direct energy to the materials disposed on the manufacturing surface (8),
- a first material supply container (16) arranged to store a first material and a second material supply container (18) arranged to store a second material,
**characterized in that**
- a first material overflow container (12) is provided at the side of the second material supply container (18), the first material overflow container (12) having a first shutter (22) separating the first material overflow container (12) from the recoating surface (6), the first shutter (22) having an open position and a closed position, and
- a second material overflow container (14) is provided at the side of the first material supply container, the second material overflow container (14) having a second shutter (24) separating the second material overflow container (14) from the recoating surface (6), the second shutter (24) having an open position and a closed position,
- the first shutter (22) and the second shutter (24) are designed for being opened and closed independently.

2. Powder bed fusion system (2) according to claim 1, **characterized in that** each material overflow container (12, 14) is arranged between the manufacturing surface (8) and one of the material supply containers (16,18).

3. Powder bed fusion system (2) according to any of the preceding claims,
**characterized in that** the shutters (22, 24) in the closed position are aligned with the recoating surface (6).

4. Powder bed fusion system (2) according to any of the preceding claims,
**characterized in that** means are provided, configured to close the first shutter (22) and to open the second shutter (24) when the second material is deposited on the manufacturing surface (8) and to close the second shutter (24) and to open the first shutter (22) when the first material is deposited on the manufacturing surface (8).

5. Powder bed fusion system (2) according to any of the preceding claims,
**characterized in that** the system (2) is configured to vary the irradiation parameters depending on the materials to be fused.

6. Powder bed fusion system (2) according to any of the preceding claims,
**characterized in that** the system (2) is configured to vary the irradiation parameters depending on the thickness of the layer to be fused.

7. Powder bed fusion system (2) according to any of the preceding claims,
**characterized in that** the energy source comprises a laser or an electron beam.

8. Powder bed fusion system (2) according to any of the preceding claims,
**characterized in that** the first and/or the second material are chosen from one or more of metal powder, ceramic powder and polymer powder.

9. A method for producing a multi-material object (4) layer-by-layer using a powder bed fusion system (2) according to any of the preceding claims,
**characterized in that**
- the first shutter (22) is closed and the second shutter (24) is opened, when the second material is deposited on the manufacturing surface (8); and
- the second shutter (24) is closed and the first shutter (22) is opened, when the first material is deposited on the manufacturing surface (8).

10. A method according to claim 9,
comprising the steps of:
- depositing at least one layer of material from one of the material supply containers (16, 18) on the manufacturing surface (8) and directing energy from the energy source to fuse each layer separately, and
- depositing at least one layer of material from another material supply container (16, 18) on the manufacturing surface (8) and energy from the energy source to fuse each layer separately.

11. A method according to any of the claims 9 or 10, comprising the steps of depositing at least two layers of material from one of the material supply containers (16, 18) on the manufacturing surface (8) and directing energy from the energy source to fuse said layers.

12. A method according to any of the claims 9 to 11,
- depositing at least one layer of material from one of the material supply containers (16, 18) on the manufacturing surface (8),
- depositing at least one layer of material from another material supply container (16, 18) on the manufacturing surface (8), and
- directing energy from the energy source to fuse said layers.
